# EUROPEAN PATENT APPLICATION

(11) **EP 2 746 931 A1**
(43) Date of publication of application: **25.06.2014**
(21) Application number: 12197704.5
(22) Date of filing: 18.12.2012
(51) Int. Cl.: G06F 9/44, G06Q 10/06

(54) **Computer-implemented method and process management system for dynamically adapting processes**

(71) Applicant: Software AG, 64297 Darmstadt (DE)
(72) Inventor: Schimmelpfennig, Jens, 66130 Güdingen (DE)
(74) Representative: Wegner, Hans

(57) **Abstract**

A computer-implemented method for adapting at least one process defined as a base model in a process management system, wherein the method comprises the following steps of defining, in the process management system, at least one adaptation layer separate from the base model, wherein the adaptation layer comprises at least one definition of an adaptation of the base model; and applying the at least one adaptation layer on the base model in accordance with at least one aggregation rule to generate an adapted model of the at least one process.

## Description

### 1. Technical field

The present invention relates to a computer-implemented method and a corresponding process management system for dynamically adapting processes.

### 2. The prior art

Complex processes are typically managed using information technology, wherein such process management comprises both design time aspects (such as the definition and development of the process) and runtime aspects (such as the controlling of the execution of the process, i.e. properly orchestrating the computer systems in charge of individual process steps, and ensuring that the process executes properly). In this context, the term "process" is to be understood as a series of steps to be executed in a specific sequence in order to achieve an overall task. Examples include the controlling of an assembly line e.g. for the manufacturing of vehicles, the controlling of the tasks to performed by individual computing systems in a flight control system, or generally controlling and orchestrating individual computing systems that perform a task of an enterprise (so-called "business process").

To this end, process management systems are known in the prior art. For example, Business Process Management (BPM) is one domain for realizing such a management of processes in providing methods, tools and technologies which are required for the design, analysis, optimization and control of processes, for example but not limited to business processes. Thus, BPM bridges the gap between business people and information technologists. In general, process description languages can be split in three categories for information technology: Business centric process description languages, technical process description languages and executable process description languages. All of these languages strive to provide precise descriptions and /or definitions of processes from different perspectives to standardize process execution.

Once a complex process has been developed and implemented within a given computing system, it is likely that the process needs to be changed or otherwise adapted to changed circumstances over its lifetime. Those skilled in the art will appreciate that adapting an already implemented complex process is a difficult task, while severe technical problems can arise already if the main process has been changed and the whole process with all its sub processes has to be adapted to the current change.

Therefore various approaches have been proposed in the prior art for adapting a process in current description languages. The prior art solutions can be grouped into two approaches, namely "process control flow branching" and "process variants", discussed in the following:

The approach "process control flow branching" splits the process by integrating decisions which fork the process into alternative process branches.

In the "process variants" approach, variants of a reference model are maintained as separate models. Variant models are in general copies of the reference model which are linked to the reference model by a relationship or by storing the reference model's identifier.

Examples of implementations of the above-explained approaches are summarized in the following:
Several integrated commercial BPM design tools are grouped in the ARIS Platform of applicant
(http://www.softwareag.com/de/products/aris_platform/default.asp), including the ARIS Business Designer, which provides functionalities to define models for a multitude of meta models. To allow flexibility in process design without having to model control flow decisions explicitly, an integrated ARIS Business Rules designer can be used to define business rules for process flow decisions. The ARIS Business Designer also provides functionalities for deriving variants of a process in order to customize a reference process to a specific process domain.

Furthermore, in the dissertation "Konfigurierbare Visualisierung komplexer Prozessmodelle" by Ralph Brobik, mechanisms for creating process views are described, which can be used to filter or aggregate artifacts of complex process models.

Moreover, applicant provides an approach referred to as "Reconciliation for ARIS Standard" which describes so-called "extensions" that are a set of model modifications bound to exactly one "context". When logging into the modeling database, a single context can be selected.

Most of the BPM design tools available on the market do not use a repository for an integrated business process management, but rather allow for the definition of individual process diagrams based on a modeling standard such as UML (http://www.uml.org/) or BPMN₂. The more advanced commercial tools are repository-based and provide support for defining variants of a process model and to incorporate business rules or technical events for complex process control flow decisions (some such as Tibco BPM event enabling to link directly to data of event types propagated on an Event Bus) but also these products do not offer any further adaptivity concepts.

However while the above-discussed prior art "process variant" approach and implementations thereof in general allow for making process variants as copies of a reference model, it lacks the ability of efficiently adapt a process. This is because the "process variant" approach produces a lot of redundant information and a change of the reference model has to be reproduced for each variant and thus all variants need to be changed accordingly. The person skilled in the art will appreciate that performing a given change in each of the copies representing a particular variant is not only cumbersome, but also involves the risk of producing errors, accidentally omitting certain changes and as a result producing inconsistent process variants. The "process control flow branching" has the disadvantage that the complexity of the process management increases with the number of decisions and branchings thereof. Along with this complexity the approach shows a further disadvantage of readability and understandability since decisions are evaluated during runtime and the process designer cannot see the actual process for a certain process instance context. Further, if a vast amount of decisions and branches are introduced in a given process definition, this might slow down the process execution, leading to reduced performance.

It is therefore the technical problem underlying the present invention to provide an approach for adapting a process defined in a process management environment in such a manner that an the process can be consistently adapted in an efficient and flexible way, thereby at least partly overcoming the above explained disadvantages of the prior art.

### 3. Summary of the invention

This problem is according to one aspect of the invention solved by a computer-implemented method for adapting at least one process defined as a base model in a process management system, wherein the method comprises the following steps:
a. defining, in the process management system, at least one adaptation layer separate from the base model, wherein the adaptation layer comprises at least one definition of an adaptation of the base model; and
b. applying the at least one adaptation layer on the base model in accordance with at least one aggregation rule to generate an adapted model of the at least one process.

Accordingly, the embodiment defines a method for adapting at least one process. The process is defined as a base model in a process management system, preferably in a graphical process design environment thereof, and can be considered as main process or reference model. Importantly at least one adaptation layer comprising at least one definition of an adaptation of the base model is additionally and separately defined in the graphical model. The at least one adaptation layer can be considered e.g. as a context specific variant and / or variation of at least part of the process defined by the base model. Accordingly, it is noted that the at least one adaptation layer is comprised in a separate definition relative to the base model, but the definition might in some embodiments still be integrated into the base model definition.

Importantly, the concept of adaptation layers which can be defined separately and independent from the base model solves the disadvantage of redundancy and dependencies of process variants normally present in the above-discussed prior art approaches. This is because a given adaptation layer defines an adaptation relative to the base model in that it preferably only comprises a definition of the "delta" relative to the base model, but not a copy of the base model itself, as in the prior art.

The at least one separate adaptation layer is preferably applied or put on top of the base model using a process management environment to generate the adapted model. In other words, the adapted model comprises in general elements of the base model (which itself remains unaffected from the adaptation) and one or a combination of distinct adaptation layers. The at least one aggregation rule is used for the generation of the adapted model, as will be further explained below.

In one aspect of the present invention, the at least one definition of an adaptation comprised in the at least one adaptation layer comprises at least one extension relative to the base model; and wherein applying the at least one adaptation layer on the base model in accordance with the at least one aggregation rule generates an adapted model which comprises at least one model element which was not present in the base model.

In a further aspect of the present invention, the method of any of the preceding claims, wherein the at least one definition of an adaptation comprised in the at least one adaptation layer comprises at least one modification relative to the base model; and wherein applying the at least one adaptation layer on the base model in accordance with the at least one aggregation rule generates an adapted model which comprises at least one modified model element of the base model.

In a further aspect of the present invention, the at least one definition of an adaptation comprised in the at least one adaptation layer comprises at least one filtering relative to the base model; and wherein applying the at least one adaptation layer on the base model in accordance with the at least one aggregation rule generates an adapted model from which at least one model element of the base model is removed.

Accordingly, the at least one adaptation layer may comprise the essential definition of an adaptation for adapting the process. As described above, three aggregation types are preferred, namely modification, extension and filtering. In general, one or more model elements of the base model in the adapted model can be altered (modification) and /or one or more new model elements can be added to the base model (extension) and / or one or more model elements can be removed (filtering) from the base model. Typically, the at least one adaptation layer can comprise distinct sets of adaptation definitions selected from any combination of the above-mentioned types, for example a set of extensions and a set of modifications.

Preferably, the at least one definition of an adaptation does not change the base model.

One important technical advantage over prior art, e.g. the "process variant" approach, provided by the present invention is that separated layers are defined, wherein the separate at least one adaptation layer comprises the at least one definition of an adaption. The actual adaptation of the process is then achieved by aggregating the base model with the at least one adaptation layer. This way, the base model remains unaffected and the at least one adaptation layer is always up to date, i.e. no further changes or adaptations are required. As already explained, the provided adaptation layers, contrary to variants, are separate and not copies of the base model. As a result, applying a particular adaptation layer to a base model has the technical advantage that an adapted model can be produced dynamically and flexibly, while the resulting adapted model is always consistent and up to date. Furthermore, in the event that the base model itself is changed, all that has to be done is applying the adaptation layer(s) once more to the changed base model in order to produce consistent and up to date adapted model(s). This is a particular advantage over the "variants" approach described further above, in which a vast amount of copies of the base model would have to be manually adapted in order to take account of a change of the base model.

In another aspect of present invention, the at least one adaptation layer comprises at least one attribute selected from the group comprising: connection, context, name, symbol, state and /or order.

In a further aspect of the present invention, a plurality of adaptation layers is defined and wherein the method comprises the further step of: activating and / or deactivating at least one of the plurality of adaptation layers to dynamically generate a corresponding adapted model of the at least one process.

Accordingly, the at least one adaptation layer can comprise at least one attribute besides the definition of an adaptation. Further, not just one single adaptation layer, but a plurality of adaptation layers can be applied on a given base model. The state of the adaptation layer(s) can be active and /or inactive and is allowed to be changed from active to inactive and vice versa e.g. via selection by a user. For example, the desired adaptation layers can be selected using checkboxes. Alternatively, a process context for which the adaptation layer is active can be described semantically or by a set of rules, defining the active state of a layer during runtime.

Typically, the user can select a set of adaptation layers using their name and / or symbol, shown in the checkbox. In selecting a layer the state of the layer may be changed to and /or remains active. Further the layers might have an ordering according to name and /or symbol e.g. n = 3 layers in an order 1,..., n: "Layer 1",...,"Layer n". According to the example an ascending order is listed and the first layer with the name and /or symbol "Layer 1" will be activated and /or applied first and layer "Layer n" last on the base model. Further selected active layers are connected to each other and /or to the base model for proper set up of the adapted model. The connection might correspond to the order of layers. This way, by selecting and/or deselecting certain adaptation layers, a variety of suitable adapted model can be flexibly produced, while the consistency of the produced models is always ensured.

In one embodiment of the present invention, the at least one adaptation layer is connected to at least one other adaptation layer via at least one relationship comprising: one of the at least two adaptation layers has an active state; and /or the at least two adaptation layers have both an active state.

In some cases adaptation layers can be connected to each other via relationships. Several types of relationships might be plausible, e.g. one type in respect to states of adaptation layers with two characteristics.

These relations according to states might be of exclusive character in that just one of the layers is allowed to be active at a time or in contrast of inclusive character in that a second layer must also be active. This is a further important aspect, since it might be required that specific adaptation layers should not be active at the same time in respect to conceptual or technical issues. For example, one adaptation layer might have at least one definition of an extension and the other adaptation might have at least one definition of a modification. Thereby, one adaptation layer might cause an extension of an incomplete modification relative to the base model. This undesired effect can be prevented by restricting the states of adaptation layers.

In a further aspect of the present invention, applying the at least one adaptation layer on the base model in accordance with at least one aggregation rule comprises: for each adaptation layer, determining whether the one adaptation layer has an active state; and applying the adaptation layer with active state on the base model to generate an adapted base model.

The state of the at least one adaptation layer can be altered and e.g. via selection by the user, by rule evaluation and / or semantic reasoning, as previously mentioned. The computer-implemented method for adapting a process of the present invention is directed to generate an adapted base model with the restriction of applying the at least one adaptation layer with active state on the base model. The method can be controlled in using the states of adaptation layers (as discussed above). In addition the method allows flexibility in providing the switch-like state (active to inactive, inactive to active).

In a further aspect of the present invention, applying the at least one adaptation layer on the base model in accordance with the at least one aggregation rule generates an adapted base model in accordance with an order defined by the at least one adaptation layer.

In a further aspect of the present invention, the method comprises adding a new adaptation layer in the process management system and /or removing at least one existing adaptation layer in the process management system.

In one embodiment of the present invention, the at least one aggregation rule comprises: adding an attribute and /or adaptation to the at least one adaptation layer and /or base model; and /or removing an attribute and /or adaptation from the at least one adaptation layer and /or base model.

Accordingly, the adaptation layers can be selected and consequently applied in the order of selection by the user and /or labeling by name and /or symbol. New adaptation layers can be added and existing or selected can be just be switched from active to inactive state and /or completely removed with all its connections to other adaptation layers. Besides the state, other attributes (listed above) of the at least one adaptation layer can be altered e.g. altering the name of the layer.

In yet another aspect, the base model comprises at least one restriction for the at least one aggregation rule.

Accordingly, in this aspect the base model serves as a central component which dictates certain restrictions defining which types of adaptations are allows to be performed. For example, the base model may comprise at least one restriction for the at least one aggregation rule in the sense that for example just the at least one order or a maximal number of adaptation layers can be defined, only certain model elements of the base model are allowed to be adapted and /or at least one permission of at least one user is restricted on right permission. The restrictions might be important to control security and avoid as one example undesired access and /or adaptation by at least one user.

Further, the present invention also provides a computer program comprising instructions for implementing any of the above-described methods.

The invention is also related to a process management system for adapting at least one process defined in a base model, wherein the process management system comprises:
a. means for defining at least one adaptation layer separate from the base model, wherein the adaptation layer comprises at least one definition of an adaptation of the base model; and
b. means for applying the at least one adaptation layer on the base model in accordance with at least one aggregation rule to generate an adapted model of the at least one process.

In further embodiments, the process management system may comprise means to perform any of the method aspects described further above.

### 4. Short description of the drawings

In the following detailed description, presently preferred embodiments of the invention are further described with reference to the following figures:
- Fig. 1:: A schematic representation of a base model and three exemplary separate adaptation layers for generating an adapted model in accordance with one embodiment of the invention.
- Fig. 2:: A schematic diagram illustrating two adapted models resulting from the base model and distinct combinations of the adaptation layers shown in Fig. 1 in accordance with one embodiment of the present invention.
- Fig. 3:: An exemplary class diagram of the at least one adaptation layer in accordance with one embodiment of the present invention.
- Fig. 4:: An exemplary diagram for applying the at least one adaptation layer on the base model to generate the adapted model in accordance with one embodiment of the present invention.
- Fig. 5:: An exemplary mock-up of the design / configuration of the adapted model comprising the base model and the at least one adaptation layer in accordance with one embodiment of the present invention.
- Fig. 6:: An exemplary mock-up of the design of the adapted model comprising the base model and the at least one adaptation layer with the additional feature of a view for the at least one adaptation layer in accordance with one embodiment of the present invention.
- Fig. 7:: A schematic illustration of a process landscape in accordance with one embodiment of the present invention.

### 5. Detailed description of preferred embodiments

### General approach:

In order to increase process flexibility and to reduce the effort for modeling process variants, process adaptation layers 20 are introduced by the present invention. In the following, the inventive concept of adaptation layers 20 will be described in the context of a base model 10 which represents a business process 2. However, it will be apparent to those skilled in the art that the present invention is not limited to business processes, but is susceptible to any kind of process, such as technical processes, e.g. defining and controlling an automotive assembly line or the like.

Process adaptation layers 20 are extensions of business process 2 models and are put "on top" of existing processes 2, extending, modifying and /or filtering the original business process 2 without changing the process 2 itself. As process 2 extensions, the adaptation layers 20 can be included in standard modeling methods such as BPMN₂ without diverging from the standard's specification. Hence, the approach extends the state of the art (as previously described further above), adding an adaptivity aspect to business process 2 modeling without compromising existing methods and approaches. This way, the present invention can be readily employed in any available process management system.

The present invention describes the modeling of process 2 models on different adaptation layers 20 that can be selectively aggregated to an adapted model 1, splitting the essence of a process 2 and its adaptations (extensions, modifiers and /or filters) into separate layers. The process 2 model to which a process adaptation layer 20 is assigned to is called the "base model" 10. Blending the process 2 adaptation layers 20 onto the base model 10 results in an aggregated "adapted model" 1 (introduced and described also further above).

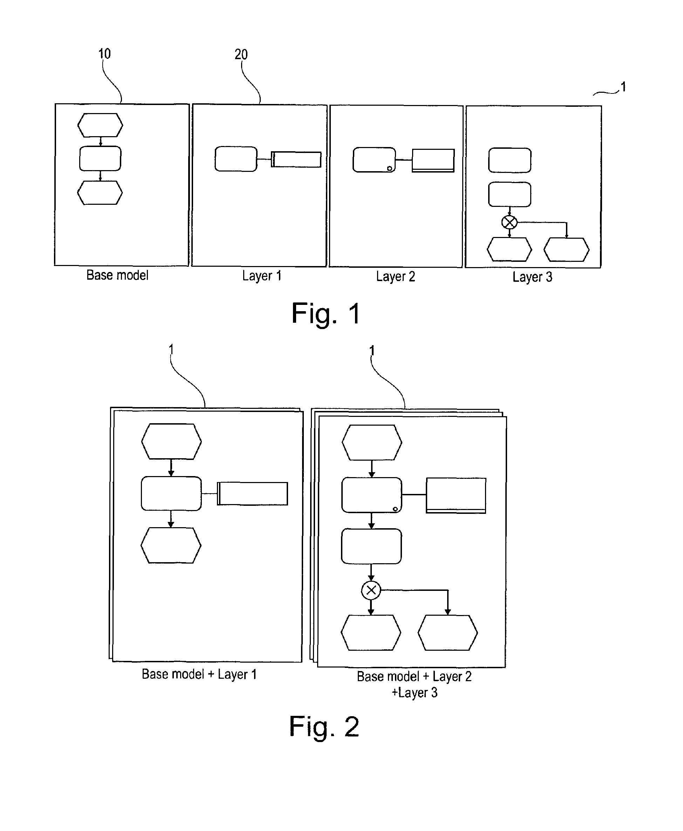

In the following, presently preferred embodiments of the invention are described with reference to a schematic diagram of the base model 10 and the at least one separated adaptation layer 20 in the generated adapted model 1 as shown in Fig. 2.

The concept of business process 2 adaptation layers 20 is related to the concept of reference models and process 2 variants, referred to "process variant" approach further above. However, resulting adapted business process 2 models are not stored as processes 2 on their own but can be dynamically generated from the base model 10 by activating or deactivating an arbitrary combination of business process 2 adaptation layers. This effectively reduces the number of required model variants, reducing modeling and maintenance effort for changing reference models and their variants, ensuring the compliance of reference processes 2 and their variants while increasing the flexibility of processes 2 at the same time.

Preferably for each adaptation layer 20, one or more aggregation rules are defined, specifying on how to "blend" or apply the adaptation layer 20 onto the base model 10. One way to do this is described in the following. The present invention, however, focuses on the layered modeling concept itself, and not only on the specific implementations of defining the aggregation rules of a layer as described below.

### The concept of aggregation layers

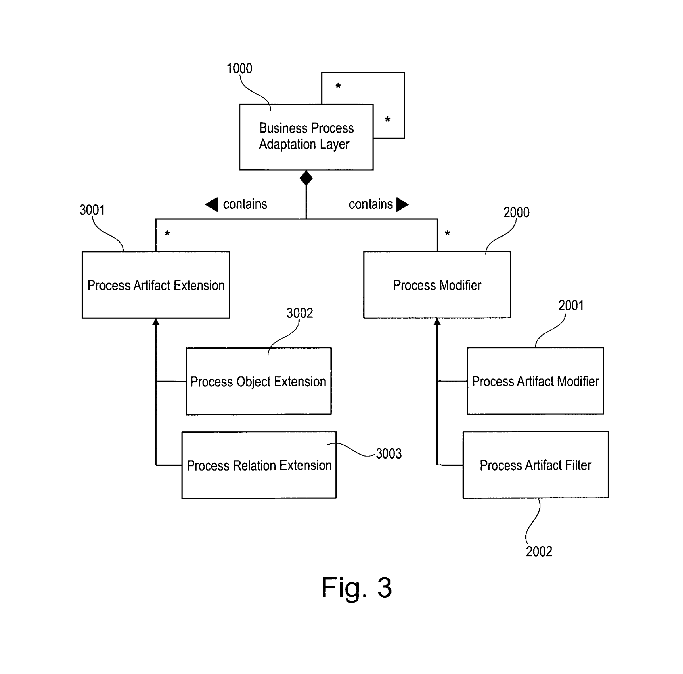

In one exemplified layer aggregation approach (see Fig. 3), each process 2 adaptation layer 20 comprises a set of process 2 extensions and a set of process 2 modifiers. Process 2 modifiers 2000 alter properties of the base model's 10 artifacts in the adapted model 1, while process extensions 3001 add new artifacts to the adapted model 1 which are not contained in the base model 1. Generally spoken, as a specialization of the adaptation layer, modifiers and extension may also apply to artifacts located on another adaptation layer (see further below with respect to introducing relationships between layers). As previously illustrated in Fig. 1, "Layer 1" contains process 2 extensions, while "Layer 2" and "Layer 3" contain process 2 modifiers and process 2 extensions. Generally, the term "artifact" or "model artifact" is to be understood as a synonym for "model element". Such a model element may be e.g. a process step, a relationship implying a certain sequence between two process steps, or a decision step which forks the control flow into separate process branches depending on a certain decision.

Business process 2 adaptation layers 20 may be nested to allow further specialization of adaptations or to adapt adaptations realized in an adaptation layer 20.

As previously mentioned, several business process adaptation layers 1000 can be applied to one base model 10. Adaptation layers 20 could be applied to other models as well (either by copying the layer or treating adaptation layers 20 as individual objects within the modeling repository).

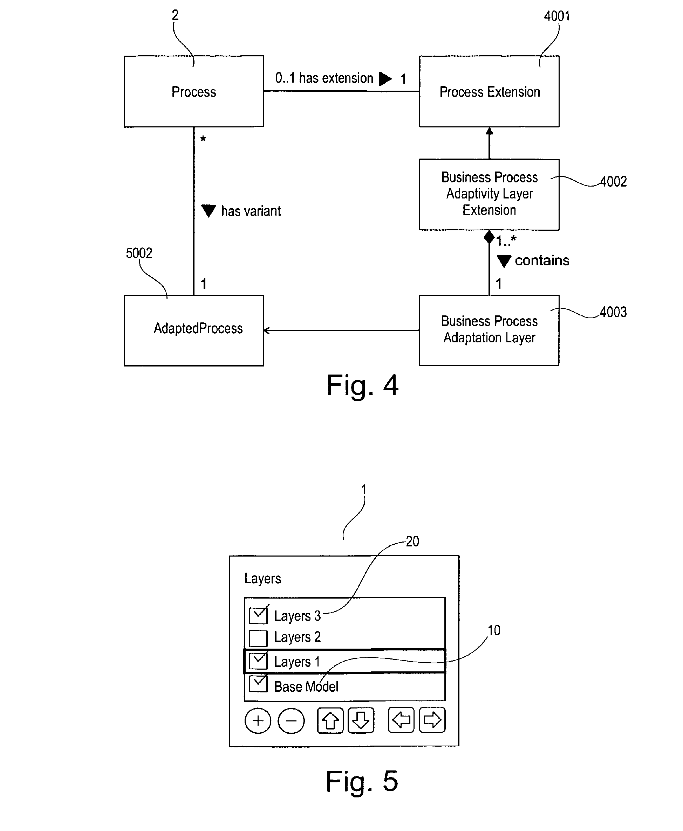

Fig. 4 depicts a way of attaching the business process adaptation layers 1000 to a process 2.

Instead of modeling a process 2 only in a two dimensional canvas (as it is common in graphical user interfaces of conventional process management systems), adaptation layers 20 of the present invention are arranged on top of the base model 10. Within these, new model artifacts can be placed. Additionally, the base model 10 artifacts can be modified. The following use cases illustrate the possibilities provided by adding a new business process 2 adaptation layer 20.

### Functional use cases: Applying business process adaptation layers to a base model

In a preferred embodiment, the business process 2 adaptation layers 20 are applied to a process 2 by the following steps:
1. If a process 2 definition is extended by a Business Process 2 Adaptivity Layer Extension 4002, the active layers 20 are determined.
2. If there is at least one active layer 20, an adapted process 5002 is created, using the process model as base model 10.
3. For each active layer 20, the set of Process Modifiers 2000 defined in the layer is applied. If the Process Modifier 2000 is a ProcessArtifactModifier 2001, the artifact in the adapted model 1 is determined and the modifications (e.g. attribute or property changes) are applied. If the Process Modifier 2000 is a ProcessArtifactFilter 2002, the artifact in the base model 10 is determined and removed from the adapted model 1.
4. For each active layer 20, the set of Process Artifact Extensions 3001defined in the layer 20 is applied. If the Process Artifact Extension 3001 is a ProcessObjectExtension 3002, a new object is placed in the adapted model 1. If the Process Artifact Extension 3001 is a ProcessRelationExtension 3003, a new connection is placed in the adapted model 1.
5. For each active layer 20, potential child layers 20 are recursively handled (see steps 3.-5.).

### Functional use cases: Adaptation layer management - layer view

To manage the adaptation layers 20 of a model, the BPM design tool (i.e. process management system) provides a modeling context selection ("layer view"), in which the base model 10 and all business process 20 adaptation layers 20 assigned to the business process 2 are listed. Fig. 5 shows an exemplified mockup of the layer 20 view. By clicking on the layer 20 name, a layer 20 can be selected. In the mockup in Fig. 5, "Layer 1" 20 is selected.

The modeling canvas of the BPM design tool always shows the adapted process 5002. The adapted process 5002 is generated by applying all active adaptation layers 20 to the base model 10 (see above). Adaptation layers 20 can be activated or deactivated (e.g. via checkbox, as depicted in Fig. 5). Once a layer 20 was active or deactivated, the adapted model 1 is updated accordingly.

Process adaptation layers 20 are preferably applied to the base model 10 in a defined sequence. In the mockup (depicted in Fig. 5), the layers 20 are applied from the base model 10 in ascending order (in the example: Layer 1, Layer 2, Layer 3). The order of layers 20 can be changed (e.g. by up/down arrows).

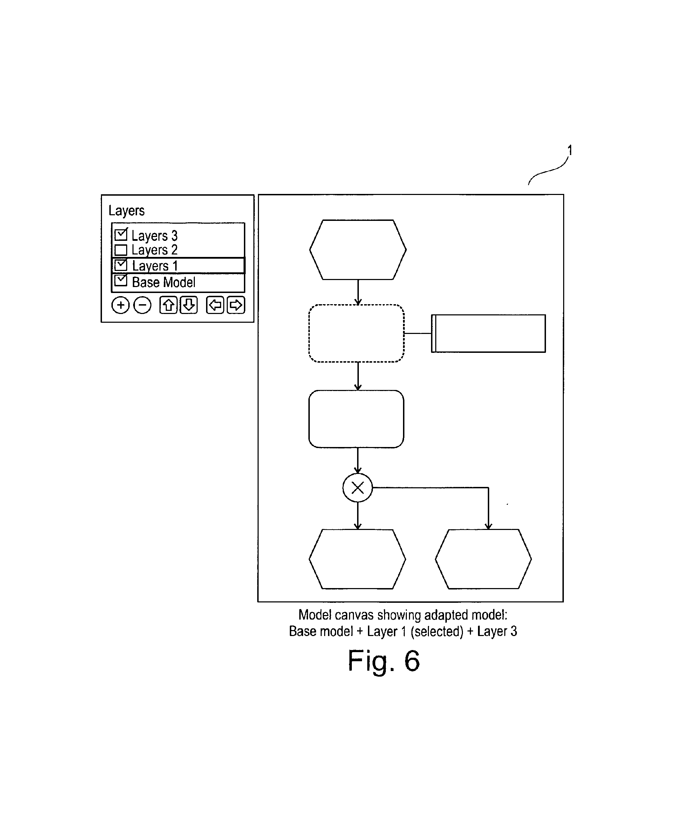

Besides the ordering of adaptation layers 20, nesting of layers 20 is also possible by assigning child layers 20 to a layer 20. In the mockup of Fig. 5, the selected layer 20 can be indented using the left/right arrows. This allows to specialize certain adaptations or to adapt artifacts of the parent layer. Additionally, new adaptation layers 20 can be added and existing layers 20 can be deleted in the layer 20 view (see Fig. 6).

### Functional use cases: Adding new process artifacts to an adaptation layer

Besides setting the state of adaptation layers 20 to active or inactive, the BPM design tool's layer 20 view allows the selection of the modeling context, e.g. by clicking on the name of the layer or the base model's 10 name. All artifacts and modifications contained in the selected layer 20 are highlighted in the adapted model in the modeling canvas. Alternatively, all artifacts that are not contained in the selected layer 20 are grayed out.

Depending on the layer 20 selection, new modeling artifacts and /or attributes (symbols or connections) placed on the modeling canvas are either added to the base model 10 (if selected) or are added to the selected adaptation layer 20.

### Functional use cases: Removing process artifacts from an adaptation layer

All of the process artifacts added to an adaptation layer 20 in order to extend a base process can be removed from the layer 20. If an object is removed, all its connections are preferably also removed from the layer 20.

### Functional use cases: Adding new process modifier to an adaptation layer

Process Modifiers allow manipulating properties of the base model 10 and it's contained artifacts. For instance, if a new process 2 step is to be inserted into a process 2 chain modeled in the base model 10, some objects need to be moved to make room for the process 2 step that is to be inserted.

To manipulate objects of the base model 10, the extension layer 20 for which the manipulation is to be carried out needs to be selected. All manipulations to objects of the base model 10 are then not applied to the base mode 10, but rather stored as process 2 modifiers in the selected adaptation layer 20.

Another process 2 modifier is the ProcessArtifactFilter 2002. While ProcessArtifactExtensions 3001 can be used to add new modeling artifacts to the aggregated model, ProcessArtifactFilters 2002 remove base model 10 artifacts from the aggregated model. This can be used to "delete" artifacts when activating an adaptation layer 20.

Within the base model 10, process 2 modifier restrictions can be defined. For instance, the owner of the process base model may define that some parts of a process cannot be modified (e.g. removed by a ProcessArtifactFilter 2002), or only if the user defining the process modifier has appropriate permissions on the base model itself.This can be used to enforce certain relevant process 2 flows and to prevent the possibility of implementing shortcuts or compromising the base model's 10 intentions by process adaptation layers 20.

### Functional use cases: Removing a process modifier from an adaptation layer

Process 2 modifiers can be removed from adaptation layers 20. This could be implemented as "revert modification" functionality in the BPM design tool.

### Functional use cases: Maintaining relationships between adaptation layers

In some cases, adaptation layers 20 can be related to each other. Such relations can be of exclusive character (e.g. only one of the layers 20 may be active at a time), inclusive character (e.g. if one layer is active, a second one must also be active) or have more complex types of relationships.

### Preferred implementation

A preferred implementation of the business process 2 adaptation layer 20 concept in the present invention comprises an implementation of the functional use cases defined above. Since the adaptation layers 20 are defined as a model extension, in most cases, the corresponding data can reside within the model's persistency (e.g. repository or file). A separate data storage is hence not required, allowing the approach to be easily integrated into existing BPM design tools without having to change the tool's data model.

### Use case implementation: Applying business process adaptation layers to a base model

The aggregation of the adapted model 1 by applying business process 2 adaptation layers is described in the following in a pseudo code implementation:
**Function:** Adapt process model
**Input:** Process P
**Output:** Adapted Process 5002 AP

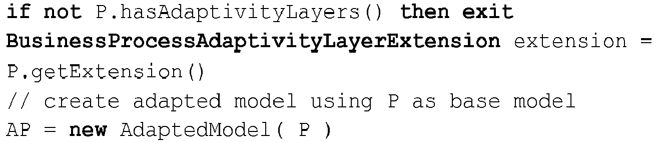

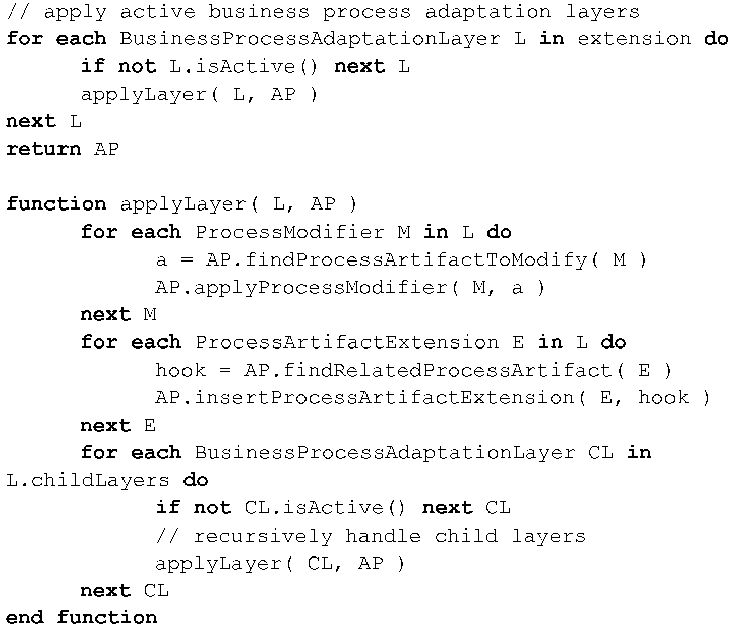

Use case implementation: Adaptation layer management - layer view

### Selection:

The BPM design tool preferably stores an index of the currently selected layer(s) 20. By catching clicks on the layer 20 view, the selection can be changed (standard UI functionalities).

### Adding/ deleting a layer:

This aspect may be implemented as click buttons in the layer 20 view (refer to the buttons "+"/"-" in Fig. 5) which add/ remove a layer 20 by adding/ removing it to/from the set of layers.

### Sorting layers:

This aspect may be implemented as click buttons in the layer20 view (refer to the buttons "up"/"down" in Fig. 5). This functionality sets the position of layers 20 within their parent's set of layers 20.

### Nesting layers:

This aspect may be implemented as click buttons in the layer 20 view (refer to the buttons "left"/"right" in Fig. 5). This functionality sets the "parent" property of the layer 20.

### Use case implementation: Adding new process artifacts to an adaptation layer

When placing artifacts on the BPM design tool canvas (i.e. within a graphical user interface of the process management system) with an adaptation layer 20 selected in the layer 20 view, a new respective ProcessArtifactExtension 3001 object is added to the adaptation layer's 20 set of ProcessArtifactExtensions 3001. If the placed artifact is a symbol, a ProcessObjectExtension 3002 is added, if a connection was modeled, a new ProcessRelationExtension 3003 is added. The relation stores the id of the source and target object, which may either be located in the base model 10, in the same adaptation layer 20 or in another active adaptation layer 20. Once the adaptation layer 20 is updated, the aggregated model is updated and displayed.

### Use case implementation: Removing process artifacts from an adaptation layer

Artifacts of a selected adaptation layer 20 can be removed from the model. In that case, the respective ProcessArtifactExtension 3001 object is removed from the selected adaptation layer's 20 set of ProcessArtifactExtensions 3001. Once the adaptation layer 20 is updated, the aggregated model is updated and displayed.

### Use case implementation: Adding a new process modifier to an adaptation layer

For each change in artifacts contained in the base model 10, a Process Modifier 2000 is stored in the currently selected layer 20. If a property such as object position, attribute value, etc. is changed, a ProcessArtifactModifier 2001 is created, for each object that was removed from the base model 10, a ProcessArtifactFilter 2002 is created. ProcessArtifactModifiers 2001 and ProcessArtifactFilters 2002 are also created when artifacts within active layers 10 other than the selected layer 20 are changed. During aggregation, such layer-specific Process Modifiers 2000 are only carried out if the respective layer 20 is also active.
Once the adaptation layer 20 is updated, the aggregated model is updated and displayed.

### Use case implementation: Removing a process modifier from an extension layer

Process modifiers can be removed from layers by deleting the respective Process Modifier 2000 object from the layer's 20 set of Process Modifiers 2000. Once the adaptation layer 20 is updated, the aggregated model is updated and displayed.

### Use case implementation: Maintaining relationships between adaptation layers

Relationships between layers 20 can be maintained as logical expressions which may be evaluated by a BPM design tool. In an exemplary data model, relationships are stored in the Business Process Adaptivity Layer Extension 4002. As references, the id of the layers 20 are stored. Defined relationships between layers 20 can also be deleted.

### Glossary

In the present invention, the term "model" is used as a generic term for an abstract description of any relevant real-world artifact (such as business processes 2, data structures, software systems, etc.) which is expressed in a (semi-)formal way following the conventions of a well-defined abstract language. The latter, defining all possible modeling elements such as objects and their attributes, potential relationships between modeling primitives and general modeling conventions, is called a "meta model". In practice, a lot of general meta models as well as application domain-specific meta models exist. In the domain of business process management, some of the most widely used meta models include the unified modeling language (UML) modeling methods (e.g. UML class diagrams, UML component diagrams, etc.; cf. http://www.omg.org/spec/UML/2.4.1/), the ARIS meta models (Event-Driven Process Chain, Value Added Chain Diagram, Organizational Chart, etc.) and Business Process Model and Notation (BPMN) meta model (cf. http://www.omg.org/spec/BPMN/2.0/), which was recently released in version 2.

Each of these exemplary meta models represent a collection of modeling elements which may be used to describe actual models and are defined in an abstract language. As an example, the UML class diagram provides the modeling elements *classes, associations, properties,* etc. Models that comply with a meta model (valid models) are called "instances" of its meta model. When creating a model using the modeling elements provided by a meta model, the meta model's modeling elements are "instantiated" in the actual model. Within graphical representations of models, most of the modeling elements are visually represented by either "symbols" or "connections".

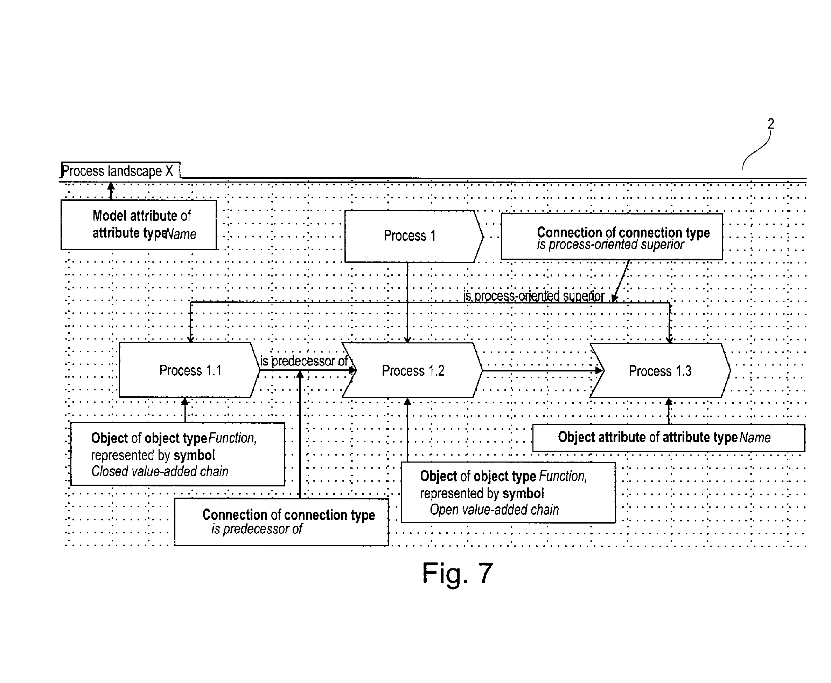

Models are often created using software tools which support one or more meta models. In the present invention, the focus lies without restriction on tools which are utilized to design models which are used for business process management. These are further referred to as "BPM design tools". Fig. 7 shows an exemplary modeling canvas of the BPM design tool ARIS Business Designer of applicant.

## Claims

1. A computer-implemented method for adapting at least one process (2) defined as a base model (10) in a process management system, wherein the method comprises the following steps:
a. defining, in the process management system, at least one adaptation layer (20) separate from the base model (10), wherein the adaptation layer (20) comprises at least one definition of an adaptation of the base model (10); and
b. applying the at least one adaptation layer (20) on the base model (10) in accordance with at least one aggregation rule to generate an adapted model (1) of the at least one process (2).

2. The method of claim 1, wherein the at least one definition of an adaptation comprised in the at least one adaptation layer (20) comprises at least one extension relative to the base model (10); and wherein applying the at least one adaptation layer (20) on the base model (10) in accordance with the at least one aggregation rule generates an adapted model (1) which comprises at least one model element which was not present in the base model (10).

3. The method of any of the preceding claims, wherein the at least one definition of an adaptation comprised in the at least one adaptation layer (20) comprises at least one modification relative to the base model (10); and wherein applying the at least one adaptation layer (20) on the base model (10) in accordance with the at least one aggregation rule generates an adapted model (1) which comprises at least one modified model element of the base model (10).

4. The method of any of the preceding claims, wherein the at least one definition of an adaptation comprised in the at least one adaptation layer (20) comprises at least one filtering relative to the base model (10); and wherein applying the at least one adaptation layer (20) on the base model (10) in accordance with the at least one aggregation rule generates an adapted model (1) from which at least one model element of the base model (10) is removed.

5. The method of any of the preceding claims, wherein the at least one definition of an adaptation does not change the base model (10).

6. The method of any of the preceding claims, wherein the at least one adaptation layer (20) comprises at least one attribute selected from the group comprising: connection, context, name, symbol, state and /or order.

7. The method of any of the preceding claims, wherein a plurality of adaptation layers (20) is defined and wherein the method comprises the further step of: activating and / or deactivating at least one of the plurality of adaptation layers (20) to dynamically generate a corresponding adapted model (1) of the at least one process (2).

8. The method of any of the preceding claims, wherein the at least one adaptation layer (20) is connected to at least one other adaptation layer (20) via at least one relationship comprising:
- one of the at least two adaptation layers (20) has an active state; and /or
- the at least two adaptation layers (20) have both an active state.

9. The method of any of the preceding claims, wherein applying the at least one adaptation layer (20) on the base model (10) in accordance with at least one aggregation rule comprises:
- for each adaptation layer (20), determining whether the one adaptation layer (20) has an active state; and
- applying the adaptation layer (20) with active state on the base model to generate an adapted base model (20).

10. The method of any of the preceding claims, comprising applying the at least one adaptation layer (20) on the base model (10) in accordance with the at least one aggregation rule to generate an adapted base model (10) in accordance with an order defined by the at least one adaptation layer (20).

11. The method of any of the preceding claims, further comprising adding a new adaptation layer (20) in the process management system and /or removing at least one existing adaptation layer (20) in the process management system.

12. The method of any of the preceding claims, wherein the at least one aggregation rule comprises:
- adding an attribute and /or adaptation to the at least one adaptation layer (20) and /or base model (10); and /or
- removing an attribute and /or adaptation from the at least one adaptation layer (20) and /or base model (10).

13. The method of any of the preceding claims, wherein the base model (10) comprises at least one restriction for the at least one aggregation rule.

14. A computer program comprising instructions for implementing a method in accordance with any of the preceding claims 1 - 13_{.}

15. A process management system for adapting at least one process (2) defined in a base model (10), wherein the process management system comprises:
a. means for defining at least one adaptation layer (20) separate from the base model (10), wherein the adaptation layer (20) comprises at least one definition of an adaptation of the base model (10); and
b. means for applying the at least one adaptation layer (20) on the base model (10) in accordance with at least one aggregation rule to generate an adapted model (10) of the at least one process (2).

## Amended claims

### Amended claims in accordance with Rule 137(2) EPC.

**1.** A computer-implemented method for adapting at least one process (2) implemented in a computing system, wherein the at least one process (2) is defined as a base model (10) in a process management system, wherein the method comprises the following steps:
a. defining, in the process management system, at least one adaptation layer (20) separate from the base model (10), wherein the adaptation layer (20) comprises at least one definition of an adaptation of the base model (10); and
b. applying the at least one adaptation layer (20) on the base model (10) in accordance with at least one aggregation rule to generate an adapted model (1) of the at least one process (2) to adapt the at least one implemented process to changed circumstances;
**characterized in that:**
c. the at least one definition of an adaptation does not change the base model (10).

**2.** The method of claim 1, wherein the at least one definition of an adaptation comprised in the at least one adaptation layer (20) comprises at least one extension relative to the base model (10); and wherein applying the at least one adaptation layer (20) on the base model (10) in accordance with the at least one aggregation rule generates an adapted model (1) which comprises at least one model element which was not present in the base model (10).

**3.** The method of any of the preceding claims, wherein the at least one definition of an adaptation comprised in the at least one adaptation layer (20) comprises at least one modification relative to the base model (10); and wherein applying the at least one adaptation layer (20) on the base model (10) in accordance with the at least one aggregation rule generates an adapted model (1) which comprises at least one modified model element of the base model (10).

**4.** The method of any of the preceding claims, wherein the at least one definition of an adaptation comprised in the at least one adaptation layer (20) comprises at least one filtering relative to the base model (10); and wherein applying the at least one adaptation layer (20) on the base model (10) in accordance with the at least one aggregation rule generates an adapted model (1) from which at least one model element of the base model (10) is removed.

**5.** The method of any of the preceding claims, wherein the at least one adaptation layer (20) comprises at least one attribute selected from the group comprising: connection, context, name, symbol, state and /or order.

**6.** The method of any of the preceding claims, wherein a plurality of adaptation layers (20) is defined and wherein the method comprises the further step of: activating and / or deactivating at least one of the plurality of adaptation layers (20) to dynamically generate a corresponding adapted model (1) of the at least one process (2).

**7.** The method of any of the preceding claims, wherein the at least one adaptation layer (20) is connected to at least one other adaptation layer (20) via at least one relationship comprising:
- one of the at least two adaptation layers (20) has an active state; and /or
- the at least two adaptation layers (20) have both an active state.

**8.** The method of any of the preceding claims, wherein applying the at least one adaptation layer (20) on the base model (10) in accordance with at least one aggregation rule comprises:
- for each adaptation layer (20), determining whether the one adaptation layer (20) has an active state; and
- applying the adaptation layer (20) with active state on the base model to generate an adapted base model (20).

**9.** The method of any of the preceding claims, comprising applying the at least one adaptation layer (20) on the base model (10) in accordance with the at least one aggregation rule to generate an adapted base model (10) in accordance with an order defined by the at least one adaptation layer (20).

**10.** The method of any of the preceding claims, further comprising adding a new adaptation layer (20) in the process management system and /or removing at least one existing adaptation layer (20) in the process management system.

**11.** The method of any of the preceding claims, wherein the at least one aggregation rule comprises:
- adding an attribute and /or adaptation to the at least one adaptation layer (20) and /or base model (10); and /or
- removing an attribute and /or adaptation from the at least one adaptation layer (20) and /or base model (10).

**12.** The method of any of the preceding claims, wherein the base model (10) comprises at least one restriction for the at least one aggregation rule.

**13.** A computer program comprising instructions for implementing a method in accordance with any of the preceding claims 1 - 12.

**14.** A process management system for adapting at least one process (2) implemented in a computing system, wherein the at least one process (2) is defined in a base model (10), wherein the process management system comprises:
a. means for defining at least one adaptation layer (20) separate from the base model (10), wherein the adaptation layer (20) comprises at least one definition of an adaptation of the base model (10); and
b. means for applying the at least one adaptation layer (20) on the base model (10) in accordance with at least one aggregation rule to generate an adapted model (10) of the at least one process (2) to adapt the at least one implemented process to changed circumstances;
**characterized in that:**
c. the at least one definition of an adaptation does not change the base model (10).
